# EUROPÄISCHE PATENTSCHRIFT

(11) **EP 2 865 072 B1**
(45) Veröffentlichungstag und Bekanntmachung des Hinweises auf die Patenterteilung: **30.11.2016**
(21) Anmeldenummer: 13731036.3
(22) Anmeldetag: 19.06.2013
(51) Int. Cl.: H02J 9/06

(54) **STELLANTRIEB, STELLANTRIEBANLAGE, VERFAHREN ZUM BETREIBEN EINES STELLANTRIEBS UND VERFAHREN ZUM BETREIBEN EINER STELLANTRIEBANLAGE**
ACTUATING DRIVE, ACTUATING DRIVE SYSTEM, METHOD FOR OPERATING AN ACTUATING DRIVE, AND METHOD FOR OPERATING AN ACTUATING DRIVE SYSTEM
MÉCANISME DE COMMANDE, DISPOSITIF À MÉCANISME DE COMMANDE, PROCÉDÉ POUR FAIRE FONCTIONNER UN MÉCANISME DE COMMANDE ET PROCÉDÉ POUR FAIRE FONCTIONNER UN DISPOSITIF À MÉCANISME DE COMMANDE

(30) Priorität: 22.06.2012 DE 102012012515
(43) Veröffentlichungstag der Anmeldung: 29.04.2015
(73) Patentinhaber: AUMA Riester GmbH & Co. KG, 79379 Müllheim (DE)
(72) Erfinder: NEWERLA, Henrik, 79395 Neuenburg (DE); WEBER, Thomas, 79424 Auggen (DE); PLATZER, Wilfried, 79100 Freiburg (DE); HOFMANN, Benjamin, 79423 Heitersheim (DE)
(74) Vertreter: Börjes-Pestalozza, Henrich
(86) Internationale Anmeldenummer: PCT/EP2013/001813
(87) Internationale Veröffentlichungsnummer: WO 2013/189599

(56) Entgegenhaltungen:
- WO-A2-2011/047490

## Beschreibung

Die Erfindung betrifft einen Stellantrieb mit einem Elektromotor und einer aus einem Zwischenkreis gespeisten Ansteuerungseinheit des Elektromotors, wobei der Zwischenkreis wenigstens einen Zwischenkreiskondensator aufweist.

Die Erfindung betrifft weiter eine Stellantriebanlage, umfassend wenigstens einen Stellantrieb und wenigstens eine Energiebereitstellungseinrichtung, wobei die wenigstens eine Energiebereitstellungseinrichtung zur Versorgung des wenigstens einen Stellantriebs mit elektrischer Energie eingerichtet ist.

Die Erfindung betrifft weiter ein Verfahren zum Betreiben eines Stellantriebs, wobei ein Zwischenkreiskondensator eine Ansteuerungseinheit eines Elektromotors des Stellantriebs speist.

Die Erfindung betrifft schließlich ein Verfahren zum Betreiben einer Stellantriebanlage, wobei wenigstens ein Stellantrieb der Stellantriebanlage aus wenigstens einer Energiebereitstellungseinrichtung der Stellantriebanlage mit elektrischer Energie versorgt wird.

Derartige Stellantriebe sind bekannt und haben sich bewährt. Sie werden beispielsweise in Anlagen eingesetzt, um Armaturen motorisch zu stellen.

Üblicherweise werden diese Stellantriebe bei Netzbetrieb aus einem Netz gespeist. Bei Stromausfall oder sonstigen Störungen kann ein Energiespeicher vorgesehen sein, welcher so dimensioniert ist, dass beispielsweise der Antrieb in einen sicheren Zustand vorfahren kann.

Bei den bekannten Stellantrieben kann alternativ oder zusätzlich eine Generatoreinheit ausgebildet sein, mit welcher elektrische Energie zum Antrieb des Elektromotors manuell erzeugbar ist. Energiespeicher und/oder Generatoreinheit bilden eine Energiebereitstellungseinrichtung zum Betrieb bei Netzausfall.

Bei den bekannten Stellantrieben ist es bislang der Fall, dass die jeweiligen Zwischenkreise aus einer individuell zugeordneten Energieversorgung gespeist sind. Somit kann die Energiebereitstellungseinrichtung optimal auf die Anforderungen des Stellantriebs abgestimmt werden.

Aus WO 2011/047490 A2 ist eine Sicherheitssteuerung für ein Stellglied bekannt, bei welcher Sicherheitsschaltungen ein Zusammenbrechen einer Versorgungsspannung detektieren und ein Signal für den Sicherheitsbetrieb geben, mit dem eine Motorensteuerung eine zugehörige Klappe in eine Sicherheitsposition fährt.

Die Erfindung stellt sich die Aufgabe, die Flexibilität bei der Konfiguration von Anlagen mit Stellantrieben zu erhöhen.

Zur Lösung dieser Aufgabe sind erfindungsgemäß die Merkmale von Anspruch 1 vorgesehen. Insbesondere ist somit bei einem Stellantrieb der eingangs beschriebenen Art vorgesehen, dass eine Überwachungseinheit ausgebildet ist, mit welcher ein momentaner Ladungszustand des Zwischenkreiskondensators ermittelbar ist, und dass die Ansteuerungseinheit zur Einstellung einer elektrischen Leistungsaufnahme des Elektromotors in Abhängigkeit von dem ermittelten momentanen Ladungszustand des Zwischenkreiskondensators eingerichtet ist. Somit ist es möglich, zur Energieversorgung des Zwischenkreises unterschiedliche Energiebereitstellungseinrichtungen vorzusehen, die unterschiedlich dimensioniert sein können. Denn mit der Überwachungseinheit ist es möglich, ein Zusammenbrechen einer Zwischenkreisspannung an dem Zwischenkreiskondensator zu vermeiden, indem die elektrische Leistungsaufnahme des Elektromotors rechtzeitig reduziert wird. Ein Ausfallen der Ansteuerungseinheit ist auf diese Weise vermeidbar. Dies ist besonders günstig bei einem netzunabhängigen Betrieb bei Netzausfall.

Bei einer Ausgestaltung der Erfindung kann vorgesehen sein, dass die Ansteuerungseinheit zur Reduzierung der Leistungsaufnahme eingerichtet ist, wenn oder solange der ermittelte Ladungszustand einer auf dem Zwischenkreiskondensator gespeicherten Ladungsmenge, die einen vorgegebenen ersten Schwellwert erreicht oder unterschreitet, entspricht. Vorzugsweise ist die Ansteuerungseinheit hierbei zur Reduzierung der Leistungsaufnahme unter einem benötigten Sollwert eingerichtet. Von Vorteil ist dabei, dass ein Zustand vermeidbar ist, in welchem eine Zwischenkreisspannung nicht mehr ausreicht, um die Ansteuerungseinheit funktionsfähig zu versorgen. Somit sind undefinierte Zustände des Elektromotors vermeidbar, insbesondere bei einem Netzausfall, bei dem eine vorgegebene Fahrposition angefahren werden soll. Beispielsweise kann der benötigte Sollwert zu einer angestrebten Fahrkurve oder Fahrposition des Stellantriebs berechnet oder vorgegeben sein. Eine Reduzierung der Leistungsaufnahme bewirkt beispielsweise, dass die Fahrkurve langsamer abgefahren oder die vorgegebene Fahrposition zu einem späteren Zeitpunkt angefahren wird. Auf diese Weise ist erreichbar, dass eine Endposition beispielsweise in einem manuellen oder aus einem Energiespeicher versorgten Notbetrieb mit einer leistungsreduzierten Fahrtkurve erreichbar ist, auch wenn die manuell oder aus dem Energiespeicher bereitgestellte Energiemenge für eine vorgegebene Fahrkurve unzureichend ist.

Bei einer Ausgestaltung der Erfindung kann vorgesehen sein, dass die Ansteuerungseinheit zur Erhöhung der Leistungsaufnahme eingerichtet ist, wenn oder bis der ermittelte Ladungszustand einer auf dem Zwischenkreiskondensator gespeicherten Ladungsmenge, die einen vorgegebenen zweiten Schwellwert erreicht oder überschreitet, entspricht. Vorzugsweise ist vorgesehen, dass die Ansteuerungseinheit zur Erhöhung der Leistungsaufnahme auf einen benötigten Sollwert eingerichtet ist, wenn oder bis der ermittelte Ladungszustand einer auf dem Zwischenkreiskondensator gespeicherten Ladungsmenge, die einen vorgegebenen zweiten Schwellwert erreicht oder überschreitet, entspricht. Von Vorteil ist dabei, dass ein verzögertes Abfahren einer Fahrkurve wieder beschleunigt ausgeführt werden kann, sobald eine ausreichende Energiemenge zum Betrieb des Stellantriebs bereit steht. Der erste Schwellwert kann einen kritischen Ladungszustand beschreiben, unterhalb dessen kein definierter Betrieb mehr garantierbar ist.

Besonders günstig ist es, wenn der zweite Schwellwert über dem ersten Schwellwert liegt. Somit ist ein Hystereseverhalten einrichtbar, welches zu häufige Schaltvorgänge für die Leistungsaufnahme vermeidet. Erster und zweiter Schwellwert können auch gleich sein.

Beispielsweise kann in der Ansteuerungseinheit eine Regel hinterlegt sein, nach welcher die elektrische Leistungsaufnahme reduziert wird oder reduzierbar ist, sobald der erste Schwellwert unterschritten wird und nach welcher die elektrische Leistungsaufnahme erhöht wird oder erhöhbar ist, sobald der zweite Schwellwert überschritten ist.

Es kann auch in der Ansteuerungseinheit eine Kennlinie hinterlegt sein, welche jedem Ladungszustand einen oberen Grenzwert für die elektrische Leistungsaufnahme zuordnet.

Besonders günstig ist es, wenn die Ansteuerungseinheit eine Leistungselektronik zur Ansteuerung des Elektromotors umfasst. Von Vorteil ist dabei, dass die momentane Leistungsaufnahme des Elektromotors durch entsprechende Ansteuerung der Leistungselektronik einstellbar ist.

Bei einer Ausgestaltung der Erfindung kann vorgesehen sein, dass die Überwachungseinheit wenigstens ein Element der Gruppe von Mittel zur Messung einer Spannung über dem Zwischenkreiskondensator, Mittel zur Messung eines in den Zwischenkreis und/oder auf den Zwischenkreiskondensator fließenden Stromes, Mittel zur Messung eines aus dem Zwischenkreis und/oder von dem Zwischenkreiskondensator abfließenden Stromes, Mittel zur Messung einer auf dem Zwischenkreiskondensator gespeicherten Ladungsmenge aufweist. Von Vorteil ist dabei, dass der Ladungszustand des Zwischenkreiskondensators als über dem Zwischenkreiskondensator anliegende Spannung, insbesondere als Zwischenkreisspannung, und/oder als auf dem Zwischenkreiskondensator gespeicherte Ladungsmenge messbar und zur Einstellung der elektrischen Leistungsaufnahme des Elektromotors verwendbar ist. Hierzu kann eine Steuerverbindung zwischen der Überwächungseinheit und der Ansteuerungseinheit eingerichtet sein. Die Ladungsmenge kann beispielsweise aus einer Differenz der aufintegrierten, gemessenen Ströme ermittelbar sein.

Allgemein kann in der Ansteuerungseinheit eine Kennlinie hinterlegt sein, welche zu einem momentanen oder jedem Ladungszustand des Zwischenkreiskondensators eine Obergrenze für eine elektrische Leistungsaufnahme des Elektromotors definiert. Die Ansteuerungseinheit kann so eingerichtet sein, dass die tatsächliche elektrische Leistungsaufnahme des Elektromotors die vorgegebene Obergrenze nicht übersteigt.

Zur Lösung der genannten Aufgabe ist bei einer Stellantriebanlage der eingangs genannten Art vorgesehen, dass der Stellantrieb erfindungsgemäß ausgebildet ist. Von Vorteil ist dabei, dass in der Stellantriebanlage Stellantriebe mit unterschiedlichen Typen von Energiebereitstellungseinrichtungen kombinierbar ist, wobei ein Entladen des Zwischenkreiskondensators unter ein vorgegebenes Niveau auch bei Netzausfall verhinderbar ist, indem die Leistungsaufnahme des Elektromotors durch die Ansteuerungseinheit entsprechend begrenzt wird.

Bevorzugt ist die Energiebereitstellungseinrichtung zur netzunabhängigen Versorgung des wenigstens einen Stellantriebs ausgebildet. Somit ist die Stellantriebanlage auch bei Netzausfall zumindest in einem Notbetrieb betreibbar.

Bei einer Ausgestaltung der Erfindung kann vorgesehen sein, dass die wenigstens eine Energiebereitstellungseinrichtung eine Generatoreinheit aufweist. Vorzugsweise ist die Generatoreinheit mit Muskelkraft, insbesondere manuell, antreibbar. Von Vorteil ist dabei, dass eine autarke Energieversorgung bei Netzausfall bereitstellbar ist, wobei undefinierte Zustände des Stellantriebs auch bei unzureichender Energieversorgung, beispielsweise im Fall einer physischen Erschöpfung eines Benutzers, mit der Erfindung vermeidbar sind.

Bei einer Ausgestaltung der Erfindung kann vorgesehen sein, dass die wenigstens eine Energiebereitstellungseinrichtung einen Energiespeicher aufweist. Bevorzugt ist der Energiespeicher beispielsweise im Netzbetrieb aufladbar ausgebildet. Von Vorteil ist dabei, dass ein Notbetrieb bei Netzausfall auch dann ermöglicht ist, wenn eine manuelle Energieversorgung nicht möglich ist oder nicht ausreicht.

Bei einer Ausgestaltung der Erfindung kann vorgesehen sein, dass wenigstens zwei Energiebereitstellungseinrichtungen ausgebildet sind, welche einzeln zur Versorgung des wenigstens einen Stellantriebs mit elektrischer Energie einsetzbar sind. Von Vorteil ist dabei, dass unterschiedliche Standorte zur Bereitstellung von elektrischer Energie beispielsweise mit Muskelkraft verwendbar sind. Dies kann beispielsweise von Vorteil sein, wenn einzelne Standorte, an denen Energiebereitstellungseinrichtungen aufgestellt sind, im Notfall nicht mehr erreichbar sind.

Alternativ oder zusätzlich kann vorgesehen sein, dass wenigstens zwei Energiebereitstellungseinrichtungen ausgebildet sind, welche gemeinsam zur Versorgung des wenigstens einen Stellantriebs mit elektrischer Energie einsetzbar sind. Somit können beispielsweise zwei mit Muskelkraft antreibbare Generatoreinheiten zum Antrieb eines Stellantriebs bei Netzausfall einsetzbar sein. Alternativ kann eine mit Muskelkraft antreibbare Generatoreihheit einer Energiebereitstellungseinrichtung durch einen beispielsweise aufladbaren Energiespeicher einer weiteren Energiebereitstellungseinrichtung unterstützbar sein. Der Energiespeicher kann auch zur Vergleichmäßigung einer mit einer mit Muskelkraft antreibbaren Generatoreinheit erzeugten elektrischen Energie verwendbar sein.

Bei einer Ausgestaltung der Erfindung kann vorgesehen sein, dass wenigstens zwei Stellantriebe ausgebildet sind, welche einzeln aus einer Energiebereitstellungseinrichtung mit elektrischer Energie versorgbar sind. Somit ist eine Energiebereitstellungseinrichtung beispielsweise zeitlich aufeinanderfolgend für die elektrische Versorgung mehrerer Stellantriebe bei Netzausfall verwendbar. Somit ist die elektrische Versorgung einzelner Stellantriebe mit einer Priorisierung der wichtigsten Stellantriebe absicherbar.

Hierzu kann vorgesehen sein, dass zu den Stellantrieben der Stellantriebanlage jeweils eine Prioritätsinformation gespeichert ist und dass die Ansteuerungseinheit und/oder wenigstens eine der Steuereinrichtungen zur Ansteuerung der Stellantriebe in einer durch die Prioritätsinformationen der Stellantriebe vorgegebenen Reihenfolge eingerichtet ist.

Alternativ oder zusätzlich kann vorgesehen sein, dass wenigstens zwei Stellantriebe ausgebildet sind, welche gemeinsam aus einer Energiebereitstellungseinrichtung mit elektrischer Energie versorgbar sind. Von Vorteil ist dabei, dass eine größere Anzahl von Stellantrieben in einem kürzeren Zeitraum bei Netzausfall betätigbar ist.

Bei einer Ausgestaltung der Erfindung kann vorgesehen sein, dass der wenigstens einen Energiebereitstellungseinrichtung eine Steuereinrichtung zugeordnet ist, mit welcher Steuereinrichtung der wenigstens eine Stellantrieb ansteuerbar ist. Von Vorteil ist dabei, dass die Steuerung des Stellantriebs bei Netzausfall am Ort der Energiebereitstellung erfolgen kann. Mit der Steuereinrichtung kann beispielsweise der jeweilige Stellantrieb von Netzbetrieb auf netzunabhängigen Betrieb umschaltbar sein. Mit der Steuereinrichtung kann der jeweilige Stellantrieb auch abschaltbar sein.

Bei einer Ausgestaltung der Erfindung kann vorgesehen sein, dass wenigstens zwei Stellantriebe umfasst sind, wobei die wenigstens eine Steuereinrichtung zur Ansteuerung mit den wenigstens zwei Stellantrieben einzeln oder gemeinsam verbindbar oder verbunden ist. Von Vorteil ist dabei, dass eine Steuereinrichtung zur zeitlich aufeinanderfolgenden oder gleichzeitigen Ansteuerung von zwei Stellantrieben oder mehr Stellantrieben einsetzbar ist.

Bei einer Ausgestaltung der Erfindung kann vorgesehen sein, dass eine Anzahl von Energiebereitstellungseinrichtungen und eine Anzahl von Stellantrieben umfasst sind, wobei eine Versorgungsleitung ausgebildet ist, mit welcher jede Energiebereitstellungseinrichtung der Anzahl von Energiebereitstellungseinrichtungen mit jedem Stellantrieb der Anzahl von Stellantrieben zur Versorgung des wenigstens einen Stellantriebs mit elektrischer Energie verbindbar oder verbunden ist. Besonders günstig ist es, wenn die Versorgungsleitung als von wenigstens zwei Energiebereitstellungseinrichtungen gleichzeitig nutzbare Versorgungsleitung, beispielsweise als mit allen Energiebereitstellungseinrichtungen der Anzahl von Energiebereitstellungseinrichtungen verbindbarer oder verbundener Energiebus, ausgebildet ist. Von Vorteil ist dabei, dass ein elektrischer Energiefluss in der Stellantriebanlage mit großer Flexibilität konfigurierbar oder leitbar ist. Somit ist eine benötigte Menge von elektrischer Energie bei Netzausfall nach Bedarf den einzelnen Stellantrieben der Anzahl von Stellantrieben zuführbar. Durch die erfindungsgemäße Einstellung der elektrischen Leistungsaufnahme in Abhängigkeit von dem Ladungszustand des jeweiligen Zwischenkreiskondensators kann auf einfache Weise erreicht oder sichergestellt werden, dass eine momentan unzureichende Energieversorgung bei Netzausfall nicht zum Zusammenbrechen der Zwischenkreisspannung und damit zu einem undefinierten Betriebszustand des jeweiligen Stellantriebs führt.

Bei einer Ausgestaltung der Erfindung kann vorgesehen sein, dass eine Anzahl von Steuereinrichtungen und eine Anzahl von Stellantrieben umfasst sind, wobei eine Steuerleitung ausgebildet ist, mit welcher jede Steuereinrichtung der Anzahl von Steuereinrichtungen mit jedem Stellantrieb der Anzahl von Stellantrieben zur Ansteuerung des wenigstens einen Stellantriebs verbindbar oder verbunden ist. Bevorzugt ist die Steuerleitung als von wenigstens zwei Steuereinrichtungen und/oder von wenigstens zwei Stellantrieben gleichzeitig nutzbare Steuerleitung, beispielsweise als mit allen Steuereinrichtungen und/oder allen Stellantrieben der Stellantriebanlage verbundener oder verbindbarer Steuerleitungsbus, ausgebildet. Somit kann eine große Flexibilität der Konfigurierbarkeit oder Bedienbarkeit der Stellantriebanlage erreicht werden.

Es sind auf diese Weise auch modular erweiterbare Stellantriebanlagen bildbar, bei denen zusätzliche Energiebereitstellungseinrichtungen, zusätzliche Stellantriebe und/oder zusätzliche Steuereinrichtungen einfach integrierbar sind. Durch die erfindungsgemäße Ausbildung der Einstellung der elektronischen Leistungsaufnahme der Elektromotoren der einzelnen Stellantriebe in Abhängigkeit von dem Ladungszustand des jeweiligen Zwischenkreiskondensators ist erreichbar, dass auch bei einer nachträglichen Integration von weiteren Stellantrieben oder Energieverbrauchern ein Zusammenbrechen der Zwischenkreisspannung an den Stellantrieben bei Netzausfall zumindest solange vermeidbar ist, bis eine definierte Endposition der Stellantriebe angefahren ist.

Eine Ausgestaltung von eigenständiger erfinderischer Qualität kann bei einer eingangs beschriebenen oder erfindungsgemäßen Stellantriebanlage vorsehen, dass die wenigstens eine Steuereinrichtung mit einer Leseeinheit in Steuerverbindung steht, wobei mit einer in die Leseeinrichtung eingelesenen Identifizierungsinformation eine Steuer- und/oder Versorgungsverbindung der Steuereinrichtung oder einer zugeordneten Energiebereitstellungseinrichtung einerseits mit wenigstens einem Stellantrieb andererseits freischaltbar ist. Beispielsweise kann die Steuerverbindung durch Abschnitte oder Teile der bereits beschriebenen Steuerleitung gebildet sein. Beispielsweise kann die Versorgungsverbindung durch Abschnitte oder Teile der bereits beschriebenen Versorgungsleitung gebildet sein. Von Vorteil ist, dass eine Freischaltung der unterschiedlichen Verbindungen in Abhängigkeit von einer Benutzerberechtigung, die zu der Identifizierungsinformation gehört, einrichtbar ist. Somit sind beispielsweise unbefugte Benutzungshandlungen vermeidbar.

Zur Lösung der genannten Aufgabe ist erfindungsgemäß bei einem Verfahren der eingangs beschriebenen Art zum Betreiben eines Stellantriebs vorgesehen, dass mit einer Überwachungseinheit ein momentaner Ladungszustand des Zwischenkreiskondensators ermittelt wird und dass mit der Ansteuerungseinheit eine Leistungsaufnahme des Elektromotors in Abhängigkeit von dem ermittelten momentanen Ladungszustand eingestellt wird. Beispielsweise kann der momentane Ladungszustand als eine auf dem Zwischenkreiskondensator gespeicherte Ladungsmenge oder als über dem Zwischenkreiskondensator anliegende Spannung ermittelt werden. Von Vorteil ist dabei, dass ein Zusammenbrechen einer Zwischenkreisspannung durch zu große Leistungsaufnahme des Elektromotors bei unzureichender Energieversorgung, beispielsweise bei Netzausfall, vermeidbar ist. Ein definierter Betrieb des Stellantriebs ist somit erreichbar, auch wenn Ausnahmesituationen wie ein Netzausfall oder eine Havarie eintreten.

Bei einer Ausgestaltung der Erfindung kann vorgesehen sein, dass die Leistungsaufnahme reduziert wird, wenn oder solange der ermittelte Ladungszustand einer auf dem Zwischenkreiskondensator gespeicherten Ladungsmenge, die einen vorgegebenen ersten Schwellwert erreicht oder unterschreitet, entspricht. Bevorzugt ist vorgesehen, dass die Leistungsaufnahme hierbei unter einen benötigen Sollwert reduziert wird. Dieser Sollwert kann sich beispielsweise aus einer vorgegebenen Fahrkurve oder einer vorgegebenen Fahrposition ergeben. Bevorzugt ist der erste Schwellwert ein Wert für die Ladungsmenge des Zwischenkreiskondensators, bei welcher eine Zwischenkreisspannung unter einen kritischen Wert gefallen ist.

Es wird somit ein Grenzwert für die elektrische Leistungsaufnahme eingestellt, der unter dem Sollwert liegt und der die elektrische Leistungsaufnahme nach oben oder von oben begrenzt.

Es kann vorgesehen sein, dass aus einer hinterlegten Kennlinie zu jedem Ladungszustand ein oberer Grenzwert für die elektrische Leistungsaufnahme ausgelesen wird. Von Vorteil ist dabei, dass die elektrische Leistungsaufnahme auf einfache Weise an eine bereitstehende Energiemenge oder an eine bereitstehende Versorgungsleistung derart anpassbar ist, dass ein Zusammenbrechen der Energieversorgung während der Ansteuerung des Stellantriebs oder der Stellantriebe vermeidbar ist.

Bei einer Ausgestaltung der Erfindung kann vorgesehen sein, dass die Leistungsaufnahme erhöht wird, wenn oder sobald der ermittelte Ladungszustand einer auf dem Zwischenkreiskondensator gespeicherten Ladungsmenge, die einen vorgegebenen zweiten Schwellwert erreicht oder überschreitet, entspricht. Bevorzugt wird die Leistungsaufnahme hierbei auf einen benötigten Sollwert erhöht. Dieser Sollwert kann sich aus einer vorgegebenen Fahrkurve oder einer vorgegebenen, anzufahrenden Fahrposition ergeben. Bevorzugt ist hierbei vorgesehen, dass der zweite Schwellwert über dem ersten Schwellwert liegt und/oder so festgelegt ist, dass eine zugehörige Zwischenkreisspannung ausreichend für einen ausfallsicheren Betrieb des Stellantriebs und insbesondere der Ansteuerungseinheit ist. Von Vorteil ist bei der Ausgestaltung, dass ein gewünschter Betrieb des Stellantriebs bei Netzausfall wieder aufnehmbar ist, sobald sich die Energieversorgung erholt hat oder sobald zusätzliche Energiebereitstellungseinrichtungen verfügbar sind oder werden.

Bei einer Ausgestaltung der Erfindung kann vorgesehen sein, dass zur Ermittlung des momentanen Ladungszustandes wenigstens ein Schritt aus der Gruppe von Messen einer Spannung über dem Zwischenkreiskondensator, Messen eines in den Zwischenkreis und/oder auf den Zwischenkreiskondensator fließenden Stromes, Messen eines aus dem Zwischenkreis und/oder von dem Zwischenkreiskondensator abfließenden Stromes und Messen einer auf dem Zwischenkreiskondensator gespeicherten Ladungsmenge ausgeführt wird. Von Vorteil ist dabei, dass eine über dem Zwischenkreiskondensator anliegende Zwischenkreisspannung direkt messbar ist beziehungsweise dass - gegebenenfalls durch Differenzbildung von zu- und abfließenden Strömen - eine auf dem Zwischenkreiskondensator gespeicherte Ladungsmenge direkt messbar oder berechenbar ist. Somit sind einfache Möglichkeiten bereitgestellt, den momentanen Ladungszustand des Zwischenkreiskondensators zu ermitteln, um die momentane Leistungsaufnahme des Elektromotors entsprechend einzustellen.

Zur Lösung der Aufgabe ist erfindungsgemäß bei dem eingangs beschriebenen Verfahren zum Betreiben einer Stellantriebanlage vorgesehen, dass in dem wenigstens einen Stellantrieb ein erfindungsgemäßes Verfahren zum Betreiben eines Stellantriebs ausgeführt wird. Von Vorteil ist dabei, dass bei Netzausfäll ein definierter Betrieb des Stellantriebs wenigstens bis zum Erreichen einer vorgegebenen Endposition sichergestellt werden kann.

Die Anforderungen an eine zur Versorgung mit elektrischer Energie anschließbare Energiebereitstellungseinrichtung können somit reduziert werden. Dies erhöht die Flexibilität bei der Konfiguration einer Anlage mit Stellantrieben.

Beispielsweise kann vorgesehen sein, dass die elektrische Energie in der Energiebereitstellungseinrichtung durch Muskelkraft bereitgestellt wird. Von Vorteil ist dabei, dass der wenigstens eine Stellantrieb bei Netzausfall autark betätigbar ist. Mit dem erfindungsgemäßen Verfahren kann erreicht werden, dass der mit der Energiebereitstellungseinrichtung durch Muskelkraft angetriebene Stellantrieb auch bei physischer Erschöpfung einer Betätigungsperson nicht in einen undefinierten Zustand gerät.

Alternativ oder zusätzlich kann vorgesehen sein, dass die elektrische Energie in der Energiebereitstellungseinrichtung aus einem Energiespeicher bereitgestellt wird. Von Vorteil ist dabei, dass eine Unabhängigkeit von der physischen Kondition des Bedienpersonals erreichbar ist. Von Vorteil ist dabei weiter, dass ein Betreiben einer Stellantriebanlage bei Netzausfall im automatisierten Betrieb ohne Bedienperson durchführbar ist.

Bei einer Ausgestaltung der Erfindung kann vorgesehen sein, dass die wenigstens zwei Stellantriebe in einer durch eine gespeicherte, den wenigstens zwei Stellantrieben jeweils zugeordnete Prioritätsinformation vorgegebenen Reihenfolge angesteuert werden. Somit ist erreichbar, dass höher priorisierte Stellantriebe vor niedriger priorisierten Stellantrieben angesteuert und betätigt werden. Von Vorteil ist dabei, dass die zu Beginn eines Netzausfalls bereitstehende oder erzeugbare Energie für eine ordnungsgemäße Ansteuerung funktionswichtiger Stellantriebe nutzbar ist.

Bei einer Ausgestaltung von eigenständiger erfinderischer Qualität kann vorgesehen sein, dass eine Steuer- und/oder Versorgungsverbindung zwischen wenigstens einer Steuereinrichtung und/oder wenigstens einer der Steuereinrichtung zugeordneten Energiebereitstellungseinrichtung einerseits und wenigstens einem Stellantrieb andererseits eingerichtet und in Abhängigkeit von einer mit einer in eine Leseeinheit eingelesene Identifizierungsinformation freigeschaltet wird. Von Vorteil ist dabei, dass ein System von Berechtigungen durch gestaffelte Identifizierungsinformationen definierbar ist, mit welchem der Stellantrieb der Stellantriebanlage - beispielsweise bei Netzausfall - von unterschiedlich berechtigtem Bedienpersonal bedienbar sind.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination einzelner oder mehrerer Merkmale der Schutzansprüche untereinander und/oder mit einzelnen oder mehreren Merkmalen des Ausführungsbeispiels.

Es zeigt
- Fig. 1: einen stark vereinfachten Schaltplan eines erfindungsgemäßen Stellantriebs,
- Fig. 2: den zeitlichen Verlauf eines momentanen Ladungszustandes eines Zwischenkreiskondensators des Stellantriebs gemäß Fig. 1 und den zeitlichen Verlauf einer eingestellten elektrischen Leistungsaufnahme eines Elektromotors aus Fig. 1 zur Erläuterung des erfindungsgemäßen Verfahrens und
- Fig. 3: ein stark vereinfachtes Blockschaltbild einer erfindungsgemäßen Stellantriebanlage.

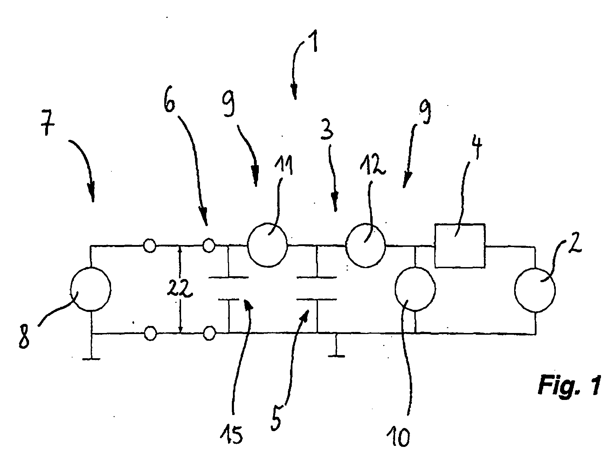

Fig. 1 zeigt einen im Ganzen mit 1 bezeichneten Antrieb, der einen Elektromotor 2 und einen Zwischenkreis 3 hat.

Eine Ansteuerungseinheit 4 umfasst in an sich bekannter Weise eine nicht weiter dargestellte Leistungselektronik zur Ansteuerung des Elektromotors 2 und wird aus dem Zwischenkreis 3 gespeist.

Der Zwischenkreis 3 weist ein Zwischenkreiskondensator 5 auf, auf welchem zur Versorgung der Ansteuerungseinheit 4 eine Ladungsmenge gespeichert ist.

An einem Eingang 6 ist der Stellantrieb 1 beim Netzbetrieb mit einem Netz und bei Netzausfall oder bei netzunabhängigem Betrieb mit einer Energiebereitstellungseinrichtung 7 verbunden.

In Fig. 1 ist der Zwischenkreis 3 an eine Energiebereitstellungseinrichtung 7 mit einer Generatoreinheit 8 angeschlossen.

Die Generatoreinheit 8 ist mit Muskelkraft manuell betreibbar und wird zum Aufladen des Zwischenkreiskondensators 5 verwendet.

Der Stellantrieb 1 weist eine Überwachungseinheit 9 auf, mit welcher ein momentaner Ladungszustand des Zwischenkreiskondensators 4 ermittelbar ist.

Hierzu weist die Überwachungseinheit 9 ein Mittel 10 zur Messung der Spannung über dem Zwischenkreiskondensator 5 auf.

Die Überwachungseinheit 9 weist ferner ein Mittel 11 zur Messung des in den Zwischenkreis 3 auf den Zwischenkreiskondensator 5 fließenden Stromes auf. Der Strom kann auch durch Abzählen der fließenden Ladungsmenge pro Zeiteinheit oder direkt durch Messung der Stromstärke gemessen werden.

Die Überwachungseinheit 9 weist weiter ein Mittel 12 zur Messung des aus dem Zwischenkreis 3 von dem Zwischenkreiskondensator 5 zur Ansteuerungseinheit 4 fließenden Stromes auf. Dies kann beispielsweise durch Messung der Stromstärke oder durch Messung einer transportierten Ladung pro Zeiteinheit erfolgen.

Durch Differenzbildung der Messergebnisse der Mittel 11 und 12 kann als Alternative zu dem Messergebnis des Mittels 10 die auf dem Zwischenkreiskondensator 5 gespeicherte Ladung oder die zugehörige Spannung berechnet werden. Hierzu wird die transportierte Ladung oder der fließende Strom zeitlich integriert.

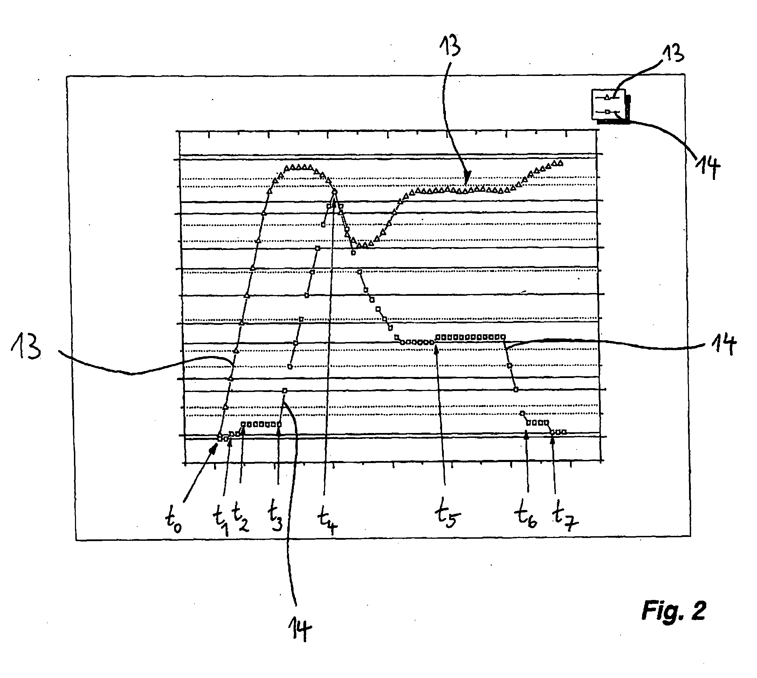

Fig. 2 zeigt den zeitlichen Verlauf 13 des Ladungszustandes des Zwischenkreiskondensators 5 während des Betriebs. Dargestellt ist in stark vereinfachter Form der qualitative Verlauf durch miteinander verbundene Dreiecke zur Erläuterung des erfindungsgemäßen Verfahrens.

Der zeitliche Verlauf 13 ergibt sich aus der mit der Überwachungseinheit 9 gemessenen oder berechneten Spannung über dem Zwischenkreiskondensator 5.

In Fig. 2 ist weiter der zeitliche Verlauf 14 der elektrischen Leistungsaufnahme des Elektromotors 2 mit untereinander verbundenen Vierecken dargestellt. Der zeitliche Verlauf 14 der elektrischen Leistungsaufnahme ist durch die Ansteuerungseinheit 4 nach dem erfindungsgemäßen Verfahren vorgegeben.

Zur Erläuterung des erfindungsgemäßen Verfahrens soll angenommen werden, dass zu einem Zeitpunkt t₀ keine elektrische Energie aus der Energiebereitstellungseinrichtung 7 oder einem Netz bereitgestellt wird.

Zu diesem Zeitpunkt ist daher der Zwischenkreiskondensator 5 entladen, und die Zwischenkreisspannung über dem Zwischenkreiskondensator 5 ist Null. Es ist aus Fig. 2 ersichtlich, dass sich ab dem Zeitpunkt t₀ die Zwischenkreisspannung aufbaut.

Nach dem Start der Energiebereitstellungseinrichtung 7 steht zu einem Zeitpunkt t₁ eine Mindestspannung am Zwischenkreiskondensator 5 bereit, mit welcher die Ansteuerungseinheit 4 starten kann. Zum Zeitpunkt t₂ ist die Ansteuerungseinheit 4 einsatzbereit.

Zum Zeitpunkt t₃ stellt die Überwachungseinheit 9 fest, dass der Ladungszustand des Zwischenkreiskondensators 5 einen zweiten Schwellwert überschritten hat.

Die Ansteuerungseinheit 4 kann somit eine Begrenzung der elektrischen Leistungsaufnahme des Elektromotors 2 aufheben. In der Folge steigt die elektrische Leistungsaufnahme des Elektromotors 2 an, um eine vorgegebene Fahrkurve bis zu einer vorgegebenen Fahrposition auszuführen.

Durch diese erhöhte elektrische Leistungsaufnahme des Elektromotors 2 erniedrigt sich der Ladungszustand des Zwischenkreiskondensators 5. Somit verringert sich die Zwischenkreisspannung.

Zum Zeitpunkt t₄ stellt die Überwachungseinheit 9 fest, dass der Ladungszustand des Zwischenkreiskondensators 5 unter einen vorgegebenen ersten Schwellwert gefallen ist.

Daher steuert die Ansteuerungseinheit 4, die in Wirkverbindung mit der Überwachungseinheit 9 steht, den Elektromotor 2 derart an, dass die elektrische Leistungsaufnahme des Elektromotors 2 wieder absinkt.

Dies führt dazu, dass sich der Ladungszustand des Zwischenkreiskondensators 5 und somit die Zwischenkreisspannung wieder erholen kann.

Zum Zeitpunkt t₅ stellt die Überwachungseinheit 9 fest, dass der Ladungszustand des Zwischenkreiskondensators 5 den bereits erwähnten zweiten Schwellwert wieder überschritten hat.

Daher kann die Ansteuerungseinheit 4 den oberen Grenzwert für die elektrische Leistungsaufnahme des Elektromotors 2 wieder anheben, so dass sich die momentane elektrische Leistungsaufnahme des Elektromotors 2 erhöht.

Zum Zeitpunkt t₆ ist die durch die Fahrkurve vorgegebene Anfahrposition erreicht, und die elektrische Leistungsaufnahme des Elektromotors 2 erniedrigt sich wieder.

Hierdurch erholt sich der Ladungszustand des Zwischenkreiskondensators 5 weiter, und die Zwischenkreisspannung steigt weiter an.

Zum Zeitpunkt t₇ ist die Kommunikation der Ansteuerungseinheit 4 mit einer die Fahrt auslösenden Stelle beendet, und die Ansteuerungseinheit 4 geht in einen Ruhezustand über.

Aus Fig. 2 ist somit deutlich ersichtlich, dass zwischen dem Beginn der Fahrt zum Zeitpunkt t₃ und dem Ende der Fahrt zum Zeitpunkt t₆ die Leistungsaufnahme reduziert wird, sobald und solange der ermittelte Ladungszustand des Zwischenkreiskondensators 5 einer Ladungsmenge entspricht, welche unter einem ersten Schwellwert liegt. Es ist weiter ersichtlich, dass die Leistungsaufnahme erhöht wird, sobald und solange der ermittelte Ladungszustand der auf dem Zwischenkreiskondensator 5 gespeicherten Ladungsmenge einen zweiten Schwellwert überschreitet.

Auf diese Weise ist einfach erreicht, dass der Stellantrieb 1 die aus der Energiebereitstellungseinrichtung 7 bereitgestellte elektrische Energie optimal ausnutzen kann, um eine vorgegebene Fahrtkurve auszuführen.

Mit anderen Worten wird bei dem Ausführungsbeispiel und insgesamt bei der Erfindung die momentane elektrische Leistungsaufnahme durch die Ansteuerungseinheit 4 so eingestellt, dass die Zwischenkreisspannung des Zwischenkreiskondensators 5 auf einen Bereich zwischen dem ersten Schwellwert und dem zweiten Schwellwert geregelt wird.

Hierzu wird mit dem Mittel 10 der Ladungszustand durch Messung der Spannung über dem Zwischenkreiskondensator 5 ermittelt oder es wird die auf dem Zwischenkreiskondensator 5 gespeicherte Ladungsmenge durch Integration der mit den Mitteln 11, 12 gemessenen Ströme und durch anschließende Differenzbildung der Ladungszustand des Zwischenkreiskondensators 5 ermittelt.

In Fig. 1 ist ferner ersichtlich, dass der Stellantrieb 1 über eine eigene Energiebereitstellungseinrichtung in Form eines Energiespeichers 15 verfügt. Dieser Energiespeicher 15 ist im vorliegenden Fall eine aufladbare Batterie.

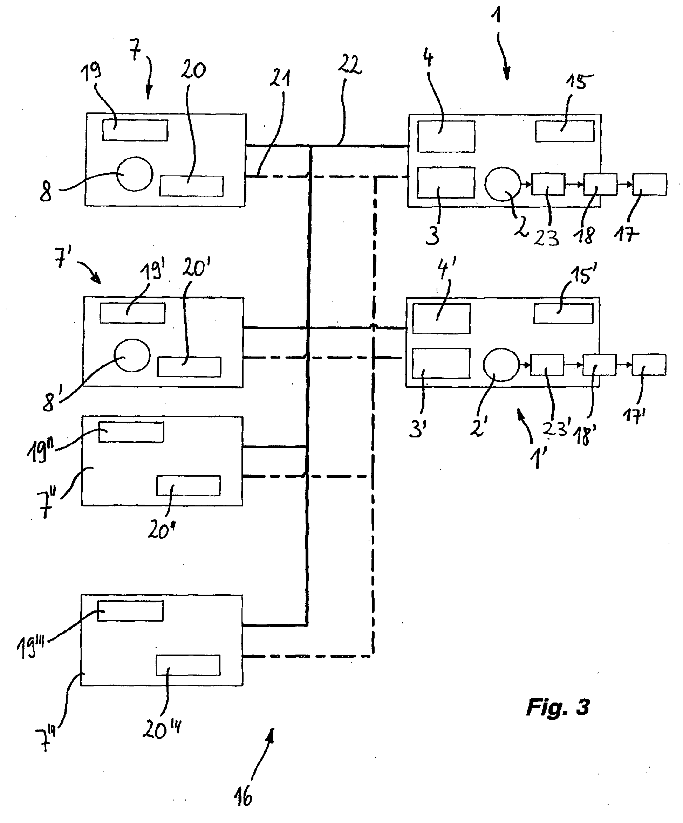

Fig. 3 zeigt in stark vereinfachter Prinzipdarstellung eine im Ganzen mit 16 bezeichnete Stellantriebanlage.

In Fig. 3 ist ersichtlich, dass der bereits zu Fig. 1 beschriebene Stellantrieb 1 zur Betätigung einer Armatur 17 eingerichtet ist.

Hierzu weist der Stellantrieb 1 in an sich bekannter Weise eine Abtrieb 18 auf, über welchen die Armatur 17 mit dem Elektromotor 2 betätigbar ist.

Ferner kann zwischen dem Elektromotor 2 und der Armatur 17 ein Getriebe 23 angeordnet sein.

Die Stellantriebanlage 16 weist ferner einen weiteren Stellantrieb 1' auf, der funktionell und konstruktiv gleichartig zu dem Stellantrieb 1 ausgebildet ist. Auch der Stellantrieb 1' weist daher einen Elektromotor 2', einen Zwischenkreis 3', eine Ansteuerungseinheit 4', einen Zwischenkreiskondensator, eine Armatur 17', einen Antrieb 18', ein Getriebe 23' und weitere Bauteile wie der Stellantrieb 1 auf.

Die Bestandteile des Stellantriebs 1' sind daher mit eingestrichenen Bezugszeichen bezeichnet und nicht noch einmal gesondert beschrieben. Vielmehr gelten die Erläuterungen zu Stellantrieb 1 analog zu Stellantrieb 1'.

Die Stellantriebanlage 16 umfasst weiter eine Energiebereitstellungseinrichtung 7. Diese Energiebereitstellungseinrichtung 7 weist eine Generatoreinheit 8 auf, welche mit Muskelkraft manuell betätigbar ist, um elektrische Energie bereit zu stellen.

Die Energiebereitstellungseinrichtung 7 weist außerdem einen Energiespeicher 19 auf, welcher mit elektrischer Energie aufladbar ist, um diese bereit zu stellen.

Die Stellantriebanlage 16 umfasst eine weitere Energiebereitstellungseinrichtung 7', welche gleichartig zu der Energiebereitstellungseinrichtung 7 ausgebildet ist. Die Erläuterungen zu der Energiebereitstellungseinrichtung 7 gelten daher für die eingestrichenen Bezugszeichen der Energiebereitstellungseinrichtung 7' entsprechend.

An der Energiebereitstellungseinrichtung 7 ist eine Steuereinrichtung 20 ausgebildet, mit welcher der Stellantrieb 1 und/oder der Stellantrieb 1' ansteuerbar sind/ist.

Hierzu ist die Steuereinrichtung 20 mit dem Stellantrieb 1 und dem Stellantrieb 1' über eine Steuerleitung 21 verbunden. Die Steuerleitung 21 hat eine baumförmige Topologie.

Auch andere Topologien sind realisierbar.

Die Steuerleitung 21 ist als Steuerbus ausgebildet, an welche die Stellantriebe 1, 1' und die Energiebereitstellungseinrichtungen 7, 7' angeschlossen sind.

Durch entsprechende Beschaltung der Steuerleitung 21 können die Stellantriebe 1 und 1' sogar gleichzeitig, beispielsweise synchron, mit der Steuereinrichtung 20 der Energiebereitstelluhgseinrichtung 7 angesteuert werden.

In analoger Weise weist die Energiebereitstellungseinrichtung 7' eine Steuereinrichtung 20' auf, mit welcher wahlweise der Stellantrieb 1 oder der Stellantrieb 1' oder beide Stellantriebe 1, 1' gemeinsam ansteuerbar ist/sind.

Die Ansteuerung mit den Steuereinrichtungen 20, 20' umfasst das Abfahren einer vorgegebenen Fahrkurve mit den Elektromotoren 2 beziehungsweise 2' zur Erreichung einer vorgegebenen Fahrposition, beispielsweise der Endposition bei einer Notabschaltung.

Zum Betrieb der Stellantriebe 1, 1' ist eine ebenfalls baumförmige Versorgungsleitung 22 ausgebildet, mit welcher jede der Energiebereitstellungseinrichtung 7, 7' mit jeder der Stellantriebe 1, 1' zur Versorgung mit elektrischer Energie verbunden ist.

Die Stellantriebanlage 16 weist ferner Energiebereitstellungseinrichtungen 7" und 7'" auf, welche sich von den Energiebereitstellungseinrichtungen 7 und 7' lediglich dadurch unterscheiden, dass keine Generatoreinheit 8, 8' ausgebildet ist.

Die Energiebereitstellungseinrichtungen 7" und 7'" stellen daher elektrische Energie nur aus ihren jeweiligen Energiespeichern 19" und 19'" bereit.

Auch die Energiebereitstellungseinrichtung 7" und 7'" sind über die Steuerleitung 21 alternativ oder gemeinsam mit einem Stellantrieb 1, 1' oder beiden Stellantrieben 1 und 1' gemeinsam verbindbar, um die Elektromotoren 2 beziehungsweise 2' entsprechend anzusteuern.

Die Energiebereitstellungseinrichtung 7" und 7'" sind ebenfalls an die Versorgungsleitung 22 angeschlossen, um eine oder beide der Stellantriebe 1, 1' oder weitere, nicht dargestellte Stellantriebe mit elektrischer Energie bei Netzausfall zu versorgen.

In Fig. 3 ist nicht weiter dargestellt, dass jede der Energiebereitstellungseinrichtungen 7, 7', 7" und 7'" mit einer jeweils zugeordneten Leseeinheit gekoppelt ist.

In die Leseeinheit ist jeweils eine Identifizierungsinformation einlesbar, beispielsweise von einer Chipkarte oder einem RFID-Chip oder dergleichen Datenträger, um eine bestimmte Steuerverbindung zwischen einzelnen oder mehreren der Energiebereitstellungseinrichtungen 7, 7', 7" und 7"' einerseits und einer oder mehreren der Stellantriebe 1, 1' andererseits entlang der Steuerleitung 21 frei zu schalten.

Für die freigeschaltete Steuerverbindung ist anschließend eine Übermittlung von Ansteuersignalen an den jeweiligen Stellantrieb 1, 1' von der jeweiligen Steuereinrichtung 20, 20', 20", 20"' durchführbar.

Mit der bereits genannten Identifizierungsinformation kann ferner eine Versorgungsverbindung zwischen einer oder mehrerer der Energiebereitstellungseinrichtungen 7, 7', 7", 7'" einerseits und einem oder mehreren der Stellantriebe 1, 1' freigeschaltet werden, so dass über die freigeschaltete Versorgungsverbindung eine Versorgung mit elektrischer Energie erfolgen kann.

Hierbei sind den einzelnen Benutzern unterschiedliche Identifizierungsinformationen zugeordnet, auf welche Weise unterschiedliche Berechtigungsstufen zur Bedienung der Stellantriebanlage 16 definierbar sind.

Bei dem Stellantrieb 1 mit einem durch eine Ansteuerungseinheit 4 angesteuerten Elektromotor 2 wird vorgeschlagen, den Ladungszustand eines Zwischenkreiskondensators 5 eines die Ansteuerungseinheit 4 versorgenden Zwischenkreises 3 zu ermitteln und in Abhängigkeit von dem ermittelten Ladungszustand eine elektrische Leistungsaufnahme des Elektromotors 2 so einzustellen, dass ein kritischer Ladungszustand des Zwischenkreiskondensators 5 vermeidbar ist.

## Patentansprüche

1. Stellantrieb (1, 1') mit einem Elektromotor (2, 2') und einer aus einem Zwischenkreis (3, 3') gespeisten Ansteuerungseinheit (4, 4') des Elektromotors (2, 2'), wobei der Zwischenkreis (3, 3') wenigstens einen Zwischenkreiskondensator (5) aufweist, **dadurch gekennzeichnet, dass** eine Überwachungseinheit (9) ausgebildet ist, mit welcher ein momentaner Ladungszustand des Zwischenkreiskondensators (5) ermittelbar ist, dass die Ansteuerungseinheit (4, 4') zur Einstellung einer elektrischen Leistungsaufnahme des Elektromotors (2, 2') in Abhängigkeit von dem ermittelten momentanen Ladungszustand des Zwischenkreiskondensators (5) eingerichtet ist und dass die Ansteuerungseinheit (4, 4') zur Reduzierung der Leistungsaufnahme eingerichtet ist, wenn oder solange der ermittelte Ladungszustand einer vorgegebenen, auf dem Zwischenkreiskondensator (5) gespeicherten Ladungsmenge, die einen vorgegebenen ersten Schwellwert erreicht oder unterschreitet, entspricht.

2. Stellantrieb (1, 1') nach Anspruch 1, **dadurch gekennzeichnet, dass** die Ansteuerungseinheit (4, 4') zur Reduzierung der Leistungsaufnahme unter einen benötigten Sollwert eingerichtet ist, wenn oder solange der ermittelte Ladungszustand einer vorgegebenen, auf dem Zwischenkreiskondensator (5) gespeicherten Ladungsmenge, die einen vorgegebenen ersten Schwellwert erreicht oder unterschreitet, entspricht, und/oder dass die Ansteuerungseinheit (4, 4') zur Erhöhung der Leistungsaufnahme, vorzugsweise auf einen benötigten Sollwert, eingerichtet ist, wenn oder sobald der ermittelte Ladungszustand einer auf dem Zwischenkreiskondensator (5) gespeicherten Ladungsmenge, die einen vorgegebenen zweiten Schwellwert erreicht oder überschreitet, entspricht, und/oder dass in der Ansteuerungseinheit (4, 4') eine Kennlinie hinterlegt ist, welche jedem Ladungszustand einen oberen Grenzwert für die elektrische Leistungsaufnahme zuordnet.

3. Stellantrieb (1, 1') nach Anspruch 1 oder 2, **dadurch gekennzeichnet, dass** die Überwachungseinheit (9) wenigstens ein Element der Gruppe von Mittel (10) zur Messung einer Spannung über dem Zwischenkreiskondensator, Mittel (11) zur Messung eines in den Zwischenkreis (3, 3') und/oder auf den Zwischenkreiskondensator (5) fließenden Stromes, Mittel (12) zur Messung eines aus dem Zwischenkreis (3, 3') und/oder von dem Zwischenkreiskondensator (5) abfließenden Stromes, Mittel zur Messung einer auf dem Zwischenkreiskondensator gespeicherten Ladungsmenge aufweist.

4. Stellantriebanlage (16), umfassend wenigstens einen Stellantrieb (1, 1') und wenigstens eine Energiebereitstellungseinrichtung (7, 7', 7", 7"'), wobei die wenigstens eine Energiebereitstellungseinrichtung (7, 7', 7", 7"') zur Versorgung des wenigstens einen Stellantriebs (1, 1') mit elektrischer Energie eingerichtet ist, **dadurch gekennzeichnet, dass** der Stellantrieb (1, 1') nach einem der vorangegangenen Ansprüche ausbildet ist.

5. Stellantriebanlage (16) nach Anspruch 4, **dadurch gekennzeichnet, dass** die wenigstens eine Energiebereitstellungseinrichtung (7, 7', 7", 7"') eine vorzugsweise mit Muskelkraft antreibbare Generatoreinheit (8, 8') und/oder einen vorzugsweise aufladbaren Energiespeicher (19, 19', 19", 19"') aufweist.

6. Stellantriebanlage (16) nach Anspruch 4 oder 5, **dadurch gekennzeichnet, dass** wenigstens zwei Energiebereitstellungseinrichtungen (7, 7', 7", 7"') ausgebildet sind, welche einzeln und/oder gemeinsam zur Versorgung des wenigstens einen Stellantriebs (1, 1') mit elektrischer Energie einsetzbar sind, und/oder dass wenigstens zwei Stellantriebe ausgebildet sind, welche einzeln und/oder gemeinsam aus wenigstens einer Energiebereitstellungseinrichtung (7, 7', 7", 7"') mit elektrischer Energie versorgbar sind.

7. Stellantriebanlage (16) nach einem Ansprüche 4 bis 6, **dadurch gekennzeichnet, dass** der wenigstens einen Energiebereitstellungseinrichtung (7, 7', 7", 7"') eine Steuereinrichtung (20, 20', 20", 20"') zugeordnet ist, mit welcher Steuereinrichtung (20, 20', 20", 20"') der wenigstens eine Stellantrieb (1, 1') ansteuerbar ist, und/oder dass wenigstens zwei Stellantriebe (1, 1') umfasst sind, wobei die wenigstens eine Steuereinrichtung (20, 20', 20", 20"') zur Ansteuerung mit den wenigstens zwei Stellantrieben (1, 1') einzeln oder gemeinsam verbindbar oder verbunden ist.

8. Stellantriebanlage (16) nach einem der Ansprüche 4 bis 7, **dadurch gekennzeichnet, dass** eine Anzahl von Energiebereitstellungseinrichtungen (7, 7', 7", 7'") und eine Anzahl von Stellantrieben (1, 1') umfasst sind, wobei eine vorzugsweise von wenigstens zwei Energiebereitstellungseinrichtungen (7, 7', 7", 7"') gleichzeitig nutzbare Versorgungsleitung (22) ausgebildet ist, mit welcher jede Energiebereitstellungseinrichtung (7, 7', 7", 7"') der Anzahl von Energiebereitstellungseinrichtungen (7, 7', 7", 7'") mit jedem Stellantrieb (1, 1') der Anzahl von Stellantrieben (1, 1') zur Versorgung des wenigstens einen Stellantriebs (1, 1') mit elektrischer Energie verbindbar oder verbunden ist, und/oder dass eine Anzahl von Steuereinrichtungen (20, 20', 20", 20'") und eine Anzahl von Stellantrieben (1, 1') umfasst sind, wobei eine vorzugsweise von wenigstens zwei Steuereinrichtungen (20, 20', 20", 20"') und/oder von wenigstens zwei Stellantrieben (1, 1') gleichzeitig nutzbare Steuerleitung (21) ausgebildet ist, mit welcher jede Steuereinrichtung (20, 20', 20", 20"') der Anzahl von Steuereinrichtungen (20, 20', 20", 20"') mit jedem Stellantrieb (1, 1') der Anzahl von Stellantrieben (1, 1') zur Ansteuerung des wenigstens einen Stellantriebs (1, 1') verbindbar oder verbunden ist.

9. Stellantriebanlage (16) nach einem der Ansprüche 4 bis 8, **dadurch gekennzeichnet, dass** zu den Stellantrieben (1, 1') jeweils eine Prioritätsinformation gespeichert ist und dass die Ansteuerungseinheit (4, 4') und/oder wenigstens eine der Steuereinrichtungen (20, 20', 20", 20"') zur Ansteuerung der Stellantriebe (1, 1') in einer durch die Prioritätsinformationen der Stellantriebe (1, 1') vorgegebenen Reihenfolge eingerichtet ist/sind.

10. Verfahren zum Betreiben eines Stellantriebs (1, 1'), wobei ein Zwischenkreiskondensator (5) eines Zwischenkreises (3, 3') eine Ansteuerungseinheit (4, 4') eines Elektromotors (2, 2') des Stellantriebs (1, 1') speist, **dadurch gekennzeichnet, dass** mit einer Überwachungseinheit (9) ein momentaner Ladungszustand des Zwischenkreiskondensators (5) ermittelt wird, dass mit der Ansteuerungseinheit (4, 4') eine Leistungsaufnahme des Elektromotors (2, 2') in Abhängigkeit von dem ermittelten momentanen Ladungszustand eingestellt wird und dass die Leistungsaufnahme reduziert wird, wenn oder solange der ermittelte Ladungszustand einer auf dem Zwischenkreiskondensator (5) gespeicherten Ladungsmenge, die einen vorgegebenen ersten Schwellwert erreicht oder unterschreitet, entspricht.

11. Verfahren nach Anspruch 10, **dadurch gekennzeichnet, dass** die Leistungsaufnahme unter einen benötigten Sollwert reduziert wird, wenn oder solange der ermittelte Ladungszustand einer auf dem Zwischenkreiskondensator (5) gespeicherten Ladungsmenge, die einen vorgegebenen ersten Schwellwert erreicht oder unterschreitet, entspricht, und/oder dass die Leistungsaufnahme vorzugsweise auf einen benötigten Sollwert erhöht wird, wenn oder sobald der ermittelte Ladungszustand einer auf dem Zwischenkreiskondensator (5) gespeicherten Ladungsmenge, die einen vorgegebenen zweiten Schwellwert erreicht oder überschreitet, entspricht, und/oder dass aus einer hinterlegten Kennlinie zu jedem Ladungszustand ein oberer Grenzwert für die elektrische Leistungsaufnahme ausgelesen wird.

12. Verfahren nach Anspruch 10 oder 11, **dadurch gekennzeichnet, dass** zur Ermittlung des momentanen Ladungszustandes wenigstens ein Schritt aus der Gruppe von Messen einer Spannung über dem Zwischenkreiskondensator (5), Messen eines in den Zwischenkreis (3, 3') und/oder auf den Zwischenkreiskondensator (5) fließenden Stromes, Messen eines aus dem Zwischenkreis (3, 3') und/oder von dem Zwischenkreiskondensator (5) abfließenden Stromes, Messen einer auf dem Zwischenkreiskondensator (5) gespeicherten Ladungsmenge ausgeführt wird.

13. Verfahren zum Betreiben einer Stellantriebanlage (16), wobei wenigstens ein Stellantrieb (1, 1') der Stellantriebanlage (16) aus wenigstens einer Energiebereitstellungseinrichtung (7, 7', 7", 7"') der Stellantriebanlage (16) mit elektrischer Energie versorgt wird, **dadurch gekennzeichnet, dass** in dem wenigstens einen Stellantrieb ein Verfahren nach einem der Ansprüche 9 bis 11 ausgeführt wird.

14. Verfahren nach Anspruch 13, **dadurch gekennzeichnet, dass** die elektrische Energie in der Energiebereitstellungseinrichtung (7, 7', 7", 7"') durch Muskelkraft und/oder aus einem Energiespeicher (19, 19', 19", 19"') bereitgestellt wird.

15. Verfahren nach Anspruch 13 oder 14, **dadurch gekennzeichnet, dass** wenigstens ein Stellantrieb (1, 1') mit elektrischer Energie gemeinsam oder alternativ aus wenigstens zwei Energiebereitstellungseinrichtungen (7, 7', 7", 7'") der Stellantriebanlage (16) versorgt wird und/oder dass wenigstens zwei Stellantriebe (1, 1') der Stellantriebanlage (16) einzeln und/oder gemeinsam mit elektrischer Energie aus einer Energiebereitstellungseinrichtung (7, 7', 7", 7"') versorgt werden.

16. Verfahren nach einem der Ansprüche 13 bis 15, **dadurch gekennzeichnet, dass** wenigstens zwei Stellantriebe (1, 1') der Stellantriebanlage (16) mit einer der wenigstens einen Energiebereitstellungseinrichtung (7, 7', 7", 7'") zugeordneten Steuereinrichtung (20, 20', 20", 20"') gemeinsam oder alternativ angesteuert werden und/oder die wenigstens zwei Stellantriebe (1, 1') in einer durch eine gespeicherte, den wenigstens zwei Stellantrieben (1, 1') jeweils zugeordnete Prioritätsin-formation vorgegebenen Reihenfolge angesteuert werden.

## Claims

1. Actuating drive (1, 1') comprising an electric motor (2, 2') and a drive unit (4, 4') of the electric motor (2, 2'), said drive unit (4, 4') being fed from an intermediate circuit (3, 3'), wherein the intermediate circuit (3, 3') has at least one intermediate circuit capacitor (5), **characterised in that** a monitoring unit (9) is formed with which a momentary state of charge of the intermediate circuit capacitor (5) is determinable, **in that** the drive unit (4, 4') is designed to set an electric power consumption of the electric motor (2, 2') in accordance with the determined momentary state of charge of the intermediate circuit capacitor (5), and **in that** the drive unit (4, 4') is designed to reduce the power consumption when, or so long as, the determined momentary state of charge corresponds to a predefined charge volume which is stored on the intermediate circuit capacitor (5) and which reaches or falls short of a predefined first threshold value.

2. Actuating drive (1, 1') as claimed in claim 1, **characterised in that** the drive unit (4, 4') is designed to reduce the power consumption below a required target value when, or so long as, the determined state of charge corresponds to a predefined charge volume which is stored on the intermediate circuit capacitor (5) and which reaches or falls short of a predefined first threshold value, and/or **in that** the drive unit (4, 4') is designed to increase the power consumption, preferably to a required target value, when, or as soon as, the determined state of charge corresponds to a charge volume which is stored on the intermediate circuit capacitor (5) and which reaches or exceeds a predefined second threshold value, and/or **in that** a characteristic line is stored in the drive unit (4, 4') and assigns to each state of charge an upper limit value for the electric power consumption.

3. Actuating drive (1, 1') as claimed in claim 1 or 2, **characterised in that** the monitoring unit (9) has at least one element from the group of means (10) for measuring a voltage via the intermediate circuit capacitor, means (11) for measuring a current flowing into the intermediate circuit (3, 3') and/or across the intermediate circuit capacitor (5), means (12) for measuring a current flowing off from the intermediate circuit (3, 3') and/or from the intermediate circuit capacitor (5), and means for measuring a charge volume stored on the intermediate circuit capacitor.

4. Actuating drive system (16), comprising at least one actuating drive (1, 1') and at least one energy provision arrangement (7, 7', 7", 7"'), wherein the at least one energy provision arrangement (7, 7', 7", 7"') is designed to supply electric energy to the at least one actuating drive (1, 1'), **characterised in that** the actuating drive (1, 1') is formed as claimed in any one of the preceding claims.

5. Actuating drive system (16) as claimed in claim 4, **characterised in that** the at least one energy provision arrangement (7, 7', 7", 7"') has a generator unit (8, 8'), which can preferably be driven by muscle power, and/or a preferably chargeable energy store (19, 19', 19", 19"').

6. Actuating drive system (16) as claimed in claim 4 or 5, **characterised in that** at least two energy provision arrangements (7, 7', 7", 7"') are formed which are usable individually and/or jointly to supply the at least one actuating drive (1, 1') with electric energy, and/or **in that** at least two actuating drives are formed which are supplied individually and/or jointly with electric energy from at least one energy provision arrangement (7, 7', 7", 7"').

7. Actuating drive system (16) as claimed in any one of claims 4 to 6, **characterised in that** the at least one energy provision arrangement (7, 7', 7", 7"') is assigned a control arrangement (20, 20', 20", 20"'), with which control arrangement (20, 20', 20", 20'") the at least one actuating drive (1, 1') can be driven, and/or **in that** at least two actuating drives (1, 1') are provided, wherein the at least one control arrangement (20, 20', 20", 20"') is or can be connected to the at least two actuating drives (1, 1') individually or jointly for driving purposes.

8. Actuating drive system (16) as claimed in any one of claims 4 to 7, **characterised in that** a number of the energy provision arrangements (7, 7', 7", 7"') and a number of the actuating drives (1, 1') are provided, wherein a supply line (22) which is preferably usable simultaneously by at least two energy provision arrangements (7, 7', 7", 7"') is formed, by means of which supply line each of the energy provision arrangements (7, 7', 7", 7"') of the number of energy provision arrangements (7, 7', 7", 7"') is or can be connected to each actuating drive (1, 1') of the number of actuating drives (1, 1') in order to supply the at least one actuating drive (1, 1') with electric energy, and/or **in that** a number of control arrangements (20, 20', 20", 20"') and a number of actuating drives (1, 1') are provided, wherein a control line (21) which is preferably usable simultaneously by at least two control arrangements (20, 20', 20", 20"') and/or by at least two actuating drives (1, 1') is formed, by means of which control line each control arrangement (20, 20', 20", 20"') of the number of control arrangements (20, 20', 20", 20'") is or can be connected to each actuating drive (1, 1') of the number of actuating drives (1, 1') in order to drive the at least one actuating drive (1, 1').

9. Actuating drive system (16) as claimed in any one of claims 4 to 8, **characterised in that** an item of priority information is stored for each of the actuating drives (1, 1'), and **in that** the drive unit (4, 4') and/or at least one of the control arrangements (20, 20', 20", 20"') is/are designed to drive the actuating drives (1, 1') in an order predefined by the priority information of the actuating drives (1, 1').

10. Method for operating an actuating drive (1, 1'), wherein an intermediate circuit capacitor (5) of an intermediate circuit (3, 3') feeds a drive unit (4, 4') of an electric motor (2, 2') of the actuating drive (1, 1'), **characterised in that** a momentary state of charge of the intermediate circuit capacitor (5) is determined with a monitoring unit (9), **in that** with the drive unit (4, 4') a power consumption of the electric motor (2, 2') is set in dependence upon the determined momentary state of charge, and **in that** the power consumption is reduced when, or so long as, the determined state of charge corresponds to a charge volume which is stored on the intermediate circuit capacitor (5) and which reaches or falls short of a predefined first threshold value.

11. Method as claimed in claim 10, **characterised in that** the power consumption is reduced below a required target value when, or so long as, the determined state of charge corresponds to a charge volume which is stored on the intermediate circuit capacitor (5) and which reaches or falls short of a predefined first threshold value, and/or the power consumption is increased preferably to a required target value when, or as soon as the determined state of charge corresponds to a charge volume which is stored on the intermediate circuit capacitor (5) and which reaches or exceeds a predefined second threshold value, and/or an upper limit value for the electric power consumption is read out from a stored characteristic line for each state of charge.

12. Method as claimed in claim 10 or 11, **characterised in that** in order to determine the momentary state of charge at least one step is performed from the group of measuring a voltage across the intermediate circuit capacitor (5), measuring a current flowing into the intermediate circuit (3, 3') and/or across the intermediate circuit capacitor (5), measuring a current flowing off from the intermediate circuit (3, 3') and/or from the intermediate circuit capacitor (5), and measuring a charge volume stored on the intermediate circuit capacitor (5).

13. Method for operating an actuating drive system (16), wherein at least one actuating drive (1, 1') of the actuating drive system (16) is supplied with electric energy from at least one energy provision arrangement (7, 7', 7", 7"') of the actuating drive system (16), **characterised in that** a method as claimed in any one of claims 9 to 11 is performed in the at least one actuating drive.

14. Method as claimed in claim 13, **characterised in that** the electric energy in the energy provision arrangement (7, 7', 7", 7"') is provided by muscle power and/or from an energy store (19, 19', 19", 19"').

15. Method as claimed in claim 13 or 14, **characterised in that** at least one actuating drive (1, 1') is supplied with electric energy jointly or alternatively from at least two energy provision arrangements (7, 7', 7", 7"') of the actuating drive system (16), and/or **in that** at least two actuating drives (1, 1') of the actuating drive system (16) are supplied individually and/or jointly with electric energy from one energy provision arrangement (7, 7', 7", 7"').

16. Method as claimed in any one of claims 13 to 15, **characterised in that** at least two actuating drives (1, 1') of the actuating drive system (16) are driven jointly or alternatively by a control arrangement (20, 20', 20", 20"') assigned to the at least one energy provision arrangement (7, 7', 7", 7"'), and/or the at least two actuating drives (1, 1') are driven in an order predefined by a stored item of priority information assigned to each of the at least two actuating drives (1, 1').

## Revendications

1. Mécanisme de commande (1, 1') avec un moteur électrique (2, 2') et une unité d'excitation (4, 4') du moteur électrique (2, 2') alimentée à partir d'un circuit intermédiaire (3, 3') dans lequel le circuit intermédiaire (3, 3') présente au moins un condensateur de circuit intermédiaire (5), **caractérisé en ce qu'**il comporte une unité de surveillance (9), avec laquelle un état de charge instantané du condensateur de circuit intermédiaire (5) peut être déterminé, **en ce que** l'unité d'excitation (4, 4') est conçue pour le réglage d'une consommation de puissance électrique du moteur électrique (2, 2') en fonction de l'état de charge instantané déterminé du condensateur de circuit intermédiaire (5) et **en ce que** l'unité d'excitation (4, 4') est conçue pour la réduction de la consommation de puissance lorsque ou aussi longtemps que l'état de charge déterminé correspond à une quantité de charge prédéterminée accumulée sur le condensateur de circuit intermédiaire (5) qui atteint ou descend en dessous d'une première valeur de seuil prédéterminée.

2. Mécanisme de commande (1, 1') selon la revendication 1, **caractérisé en ce que** l'unité d'excitation (4, 4') est conçue pour la réduction de la consommation de puissance en dessous d'une valeur de consigne requise, lorsque ou aussi longtemps que l'état de charge déterminé correspond à une quantité de charge prédéterminée accumulée sur le condensateur de circuit intermédiaire (5) qui atteint ou descend en dessous d'une première valeur de seuil prédéterminée et/ou **en ce que** l'unité d'excitation (4, 4') est conçue pour une augmentation de la consommation de puissance, de préférence à une valeur de consigne requise, lorsque ou aussitôt que l'état de charge déterminé correspond à une quantité de charge accumulée sur le condensateur de circuit intermédiaire (5) qui atteint ou dépasse une deuxième valeur de seuil prédéterminée et/ou **en ce qu'**une courbe caractéristique est mémorisée dans l'unité d'excitation (4, 4') qui associe à chaque état de charge une valeur limite supérieure pour la consommation de puissance électrique.

3. Mécanisme de commande (1, 1') selon la revendication 1 ou 2, **caractérisé en ce que** l'unité de surveillance (9) présente au moins un élément du groupe de moyens (10) pour la mesure d'une tension aux bornes du condensateur de circuit intermédiaire, de moyens (11) pour la mesure d'un courant circulant dans le circuit intermédiaire (3, 3') et/ou sur le condensateur de circuit intermédiaire (5), de moyens (12) pour la mesure d'un courant s'écoulant hors du circuit intermédiaire (3, 3') et/ou du condensateur de circuit intermédiaire (5), de moyens pour la mesure d'une quantité de charge accumulée sur le condensateur de circuit intermédiaire.

4. Dispositif à mécanisme de commande (16), comprenant un mécanisme de commande (1, 1') et au moins un système de fourniture d'énergie (7, 7', 7", 7"'), dans lequel ledit au moins un système de fourniture d'énergie (7, 7', 7", 7"') est conçu pour l'alimentation dudit au moins un mécanisme de commande (1, 1'), **caractérisé en ce que** le mécanisme de commande (1, 1') est réalisé selon l'une quelconque des revendications précédentes.

5. Dispositif à mécanisme de commande (16) selon la revendication 4, **caractérisé en ce que** ledit au moins un système de fourniture d'énergie (7, 7', 7", 7"') présente une unité de générateur (8, 8') actionnable de préférence avec la force musculaire et/ou un accumulateur d'énergie (19, 19', 19", 19"') de préférence rechargeable.

6. Dispositif à mécanisme de commande (16) selon la revendication 4 ou 5, **caractérisé en ce qu'**il comporte au moins deux systèmes de fourniture d'énergie (7, 7', 7", 7'") qui peuvent être utilisés individuellement et/ou en commun pour l'alimentation dudit au moins un mécanisme de commande (1, 1') en énergie électrique et/ou **en ce qu'**il comporte au moins deux mécanismes de commande, qui peuvent être alimentés en énergie électrique individuellement et/ou en commun à partir d'au moins un système de fourniture d'énergie (7, 7', 7", 7"').

7. Dispositif à mécanisme de commande (16) selon l'une quelconque des revendications 4 à 6, **caractérisé en ce qu'**un dispositif de commande (20, 20', 20", 20"') est associé audit au moins un système de fourniture d'énergie (7, 7', 7", 7"'), dispositif de commande (20, 20', 20", 20"') avec lequel ledit au moins un mécanisme de commande (1, 1') peut être excité, et/ou **en ce qu'**il comprend au moins deux mécanismes de commande (1, 1'), dans lequel ledit au moins un dispositif de commande (20, 20', 20", 20"') peut être ou est relié individuellement ou en commun pour l'excitation auxdits au moins deux mécanismes de commande (1, 1').

8. Dispositif à mécanisme de commande (16) selon l'une quelconque des revendications 4 à 7, **caractérisé en ce qu'**il comprend un nombre de systèmes de fourniture d'énergie (7, 7', 7", 7"') et un nombre de mécanismes de commande (1, 1'), dans lequel il comporte une ligne d'alimentation (22) utilisable simultanément de préférence par au moins deux systèmes de fourniture d'énergie (7, 7', 7", 7"'), avec laquelle chaque système de fourniture d'énergie (7, 7', 7", 7"') du nombre de systèmes de fourniture d'énergie (7, 7', 7", 7"') peut être ou est relié à chaque mécanisme de commande (1, 1') du nombre de mécanismes de commande (1, 1') pour l'alimentation dudit au moins un mécanisme de commande (1, 1') en énergie électrique et/ou **en ce qu'**il comprend un nombre de dispositifs de commande (20, 20', 20", 20"') et un nombre de mécanismes de commande (1, 1'), dans lequel il comporte une ligne de commande (21) utilisable simultanément de préférence par au moins deux dispositifs de commande (20, 20', 20", 20"') et/ou par au moins deux mécanismes de commande (1, 1'), avec laquelle chaque dispositif de commande (20, 20', 20", 20"') du nombre de dispositifs de commande (20, 20', 20", 20"') peut être ou est relié à chaque mécanisme de commande (1, 1') du nombre des mécanismes de commande (1, 1') pour l'excitation dudit au moins un mécanisme de commande (1, 1').

9. Dispositif à mécanisme de commande (16) selon l'une quelconque des revendications 4 à 8, **caractérisé en ce qu'**une information de priorité est mémorisée respectivement pour les mécanismes de commande (1, 1') et **en ce que** l'unité d'excitation (4, 4') et/ou au moins l'un des dispositifs de commande (20, 20', 20", 20"') est conçu(e)/sont conçus pour l'excitation des mécanismes de commande (1, 1') dans un ordre prédéterminé par les informations de priorité des mécanismes de commande (1, 1').

10. Procédé pour faire fonctionner un mécanisme de commande (1, 1'), dans lequel un condensateur de circuit intermédiaire (5) d'un circuit intermédiaire (3, 3') alimente une unité d'excitation (4, 4') d'un moteur électrique (2, 2') du mécanisme de commande (1, 1'), **caractérisé en ce que** l'on détermine avec une unité de surveillance (9) un état de charge instantané du condensateur de circuit intermédiaire (5), **en ce que** l'on règle avec l'unité d'excitation (4, 4') une consommation de puissance du moteur électrique (2, 2') en fonction de l'état de charge instantané déterminé et **en ce que** l'on réduit la consommation de puissance, lorsque ou aussi longtemps que l'état de charge déterminé correspond à une quantité de charge accumulée sur le condensateur de circuit intermédiaire (5) qui atteint ou descend en dessous d'une première valeur de seuil prédéterminée.

11. Procédé selon la revendication 10, **caractérisé en ce que** l'on réduit la consommation de puissance en dessous d'une valeur de consigne requise, lorsque ou aussi longtemps que l'état de charge déterminé correspond à une quantité de charge accumulée sur le condensateur de circuit intermédiaire (5) qui atteint ou descend en dessous d'une première valeur de seuil prédéterminée et/ou en ce que l'on augmente la consommation de puissance de préférence à une valeur de consigne requise, lorsque ou aussitôt que l'état de charge déterminé correspond à une quantité de charge accumulée sur le condensateur de circuit intermédiaire (5) qui atteint ou dépasse une deuxième valeur de seuil prédéterminée et/ou **en ce qu'**on lit une valeur limite supérieure pour la consommation de puissance électrique à partir d'une courbe caractéristique mémorisée pour chaque état de charge.

12. Procédé selon la revendication 10 ou 11, **caractérisé en ce que**, pour la détermination de l'état de charge instantané, on exécute au moins une étape du groupe comprenant la mesure d'une tension aux bornes du condensateur de circuit intermédiaire (5), la mesure d'un courant circulant dans le circuit intermédiaire (3, 3') et/ou sur le condensateur de circuit intermédiaire (5), la mesure d'un courant s'écoulant hors du circuit intermédiaire (3, 3') et/ou du condensateur de circuit intermédiaire (5), la mesure d'une quantité de charge accumulée sur le condensateur de circuit intermédiaire (5).

13. Procédé pour faire fonctionner un dispositif à mécanisme de commande (16), dans lequel on alimente en énergie électrique au moins un mécanisme de commande (1, 1') du dispositif à mécanisme de commande (16) à partir d'au moins un système de fourniture d'énergie (7, 7', 7", 7"') du dispositif à mécanisme de commande (16), **caractérisé en ce que** l'on exécute dans ledit au moins un mécanisme de commande un procédé selon l'une quelconque des revendications 9 à 11.

14. Procédé selon la revendication 13, **caractérisé en ce que** l'on prépare l'énergie électrique dans le système de fourniture d'énergie (7, 7', 7", 7"') par la force musculaire et/ou à partir d'un accumulateur d'énergie (19, 19', 19", 19"').

15. Procédé selon la revendication 13 ou 14, **caractérisé en ce que** l'on alimente au moins un mécanisme de commande (1, 1') en énergie électrique en commun ou en alternance à partir d'au moins deux systèmes de fourniture d'énergie (7, 7', 7", 7"') du dispositif à mécanisme de commande (16) et/ou **en ce que** l'on alimente au moins deux mécanismes de commande (1, 1') du dispositif à mécanisme de commande (16) en énergie électrique individuellement et/ou en commun à partir d'un système de fourniture d'énergie (7, 7', 7", 7"').

16. Procédé selon l'une quelconque des revendications 13 à 15, **caractérisé en ce que** l'on excite au moins deux mécanismes de commande (1, 1') du dispositif à mécanisme de commande (16) en commun ou en alternance avec un dispositif de commande (20, 20', 20", 20"') associé audit au moins un système de fourniture d'énergie (7, 7', 7", 7"') et/ou **en ce que** l'on excite lesdits au moins deux mécanismes de commande (1, 1') dans un ordre prédéterminé par une information de priorité mémorisée respectivement associée auxdits au moins deux mécanismes de commande (1, 1').
